# EUROPEAN PATENT APPLICATION

(11) **EP 1 350 944 A1**
(43) Date of publication of application: **08.10.2003**
(21) Application number: 01271496.0
(22) Date of filing: 05.12.2001
(51) Int. Cl.: F02M 21/06, F02M 35/10, F02M 37/00

(54) **GAS FUEL FEEDER OF INTERNAL COMBUSTION ENGINE**

(30) Priority: 18.12.2000 JP 2000383441
(71) Applicant: YAMAHA HATSUDOKI KABUSHIKI KAISHA, Iwata-shi, Shizuoka 438-8501 (JP)
(72) Inventor: MATSUMOTO, Hiromitsu, Iwata-shi, Shizuoka 438-8501 (JP)
(74) Representative: Grünecker, Kinkeldey, Stockmair & Schwanhäusser Anwaltssozietät
(86) International application number: JP0110652
(87) International publication number: WO02050418

(57) **Abstract**

A gas fuel supply device for an internal combustion engine adapted to vaporize liquid fuel in an fuel tank 2 into a gas fuel and supply the gas fuel to a fuel injection valve 4, the gas fuel supply device comprising: a vaporizer 11 interposed in a fuel supply pipe 6 for vaporizing the liquid fuel; a gas fuel pressure sensor 37 for detecting the gas fuel pressure on the downstream side of the vaporizer 11; and an ECU 35 (throttle opening control means) for limiting the maximum opening of a throttle valve according to the gas fuel pressure detected by the gas fuel pressure sensor 37.

## Description

### Technical Field

The present invention relates to a gas fuel supply device for supplying propane or a fuel mixture of propane and butane (LPG), for example, to an internal combustion engine.

### Background Art

It is well known that, in a gasoline engine for a vehicle, an electronic controlled fuel supply is functionally superior in many ways to a fuel supply with a carburetor. Namely, an electronic controlled fuel supply device is excellent in controllability, reliability, leaning functions, degree of freedom in the layout of an air intake system and so on and has advantages in control of exhaust gas, mileage performance, output characteristics and so on.

LPG fuels are easily vaporized at ambient temperature and pressure, and, when an LPG gas fuel is supplied to an engine, the engine exhibits very low-emission characteristics both in cold starting and during transitions, namely acceleration and deceleration. Also, LPG fuels have a higher octane rating and a lower carbon content than gasoline, so that the engine can be operated at a high compression ratio and CO₂ emission can be reduced.

By employing an LPG fuel having such advantages in an electronic controlled fuel supply device provided with one or more fuel injection valves, it is possible to reduce pollutants in exhaust gas and CO₂ emission.

However, when an LPG fuel is employed in an electronic controlled fuel supply device, the fuel injection pressure may not be maintained stably over the engine operation after warm-up of the engine has been completed from the condition in which the engine is still cool because the vapor pressure of an LPG fuel significantly varies with temperature.

For example, necessary evaporation amount and gas fuel pressure (fuel injection pressure) cannot be obtained depending upon the temperature of the atmosphere around the fuel tank. When fuel consumption in the engine is increased under a small evaporation amount and a low vapor pressure, liquid fuel may flow to the engine side and, in some cases, the engine may become uncontrollable.

The present invention has been made in view of the above circumstances and it is, therefore, an object of the present invention to provide a gas fuel supply device for an internal combustion engine which can maintain the injection pressure of gas fuel over the engine operation after warm-up of the engine has been completed from the condition in which the engine is still cool and thus can perform fuel injection control with stability.

### Disclosure of the invention

The invention of claim 1 is a gas fuel supply device for an internal combustion engine, adapted to vaporize liquid fuel in a fuel tank into a gas fuel and supply the gas fuel to a fuel injection valve, the gas fuel supply device comprising: a vaporizer interposed in a fuel supply passage for vaporizing the liquid fuel, fuel pressure detecting means for detecting the gas fuel pressure on the downstream side of the vaporizer, and throttle opening control means for limiting the maximum opening of a throttle valve according to the gas fuel pressure detected by the fuel pressure detecting means.

The invention of claim 2 is the gas fuel supply device for an internal combustion engine as claimed in claim 1, wherein the throttle opening control means is configured to determine the maximum opening of the throttle valve based on the gas fuel pressure and the engine speed.

The invention of claim 3 is the gas fuel supply device for an internal combustion engine as claimed in claim 1 or 2, wherein the throttle opening control means is configured to output a rated output operation impossible signal to display means when the gas fuel pressure detected by the fuel pressure detecting means is a predetermined value or lower.

The invention of claim 4 is a gas fuel supply device for an internal combustion engine, adapted to vaporize liquid fuel in a fuel tank into a gas fuel and supply the gas fuel to a fuel injection valve, the gas fuel supply device comprising: a vaporizer interposed in a fuel supply passage for vaporizing the liquid fuel, a fuel pump for supplying the liquid fuel in the fuel tank to the vaporizer, fuel pressure detecting means for detecting the gas fuel pressure on the downstream side of the vaporizer, and fuel pump control means for operating the fuel pump when the gas fuel pressure on the downstream side of the vaporizer is a predetermined value or lower.

The invention of claim 5 is the gas fuel supply device for an internal combustion engine as claimed in claim 4, further comprising liquid fuel detecting means for detecting liquid fuel on the downstream side of the vaporizer, wherein the fuel pump control means stops the operation of the fuel pump when the liquid fuel detecting means detects liquid fuel.

The invention of claim 6 is the gas fuel supply device for an internal combustion engine as claimed in claim 4 or 5, further comprising a surge tank for reserving gas fuel vaporized in the vaporizer.

The invention of claim 7 is the gas fuel supply device for an internal combustion engine as claimed in claim 5 or 6, wherein the liquid fuel detecting means is a level sensor for detecting the surface level of liquid fuel flown into the surge tank.

The invention of claim 8 is the gas fuel supply device for an internal combustion engine as claimed in any one of claims 4 to 7, further comprising a relief valve disposed on the discharge port side of the fuel pump, wherein the relief pressure of the relief valve is set equal to or slightly lower than the gas fuel pressure on the downstream side of the vaporizer.

The invention of claim 9 is the gas fuel supply device for an internal combustion engine as claimed in claim 8, further comprising a check valve disposed between the discharge port of the fuel pump and the relief valve for preventing reverse flow of liquid fuel to the fuel pump.

The invention of claim 10 is the gas fuel supply device for an internal combustion engine as claimed in claim 8 or 9, wherein the relief valve has a fuel relief opening which is not oriented to the suction port of the fuel pump.

### Brief Description of Drawings

FIG. 1 is a view, illustrating the entire structure of a gas fuel supply device according to a first embodiment of the present invention;
FIG. 2 is a cross-sectional view of a thermostat of the gas fuel supply device;
FIG. 3 is a control diagram, illustrating the ECU of the gas fuel supply device;
FIG. 4 is a characteristic curves, showing the relations between the vapor pressures of LPG fuels and the temperature in the above embodiment;
FIG. 5 is a characteristic curve, showing the relation between the gas fuel pressure and the maximum opening of a throttle valve in the above embodiment;
FIG. 6 is a flowchart, illustrating the operation of a fuel pump of the gas fuel supply device; and
FIG. 7 is a view, illustrating the entire structure of a fuel supply device according to a second embodiment of the present invention.

### Best Mode for Carrying Out the Invention

Description will be hereinafter made of the embodiments of the present invention with reference to the accompanying drawings.

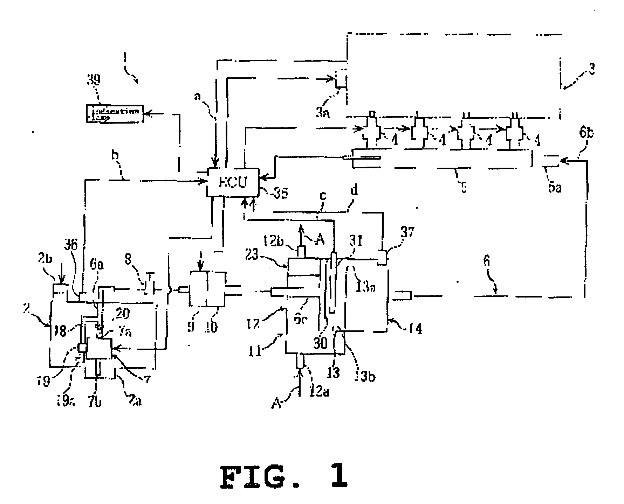

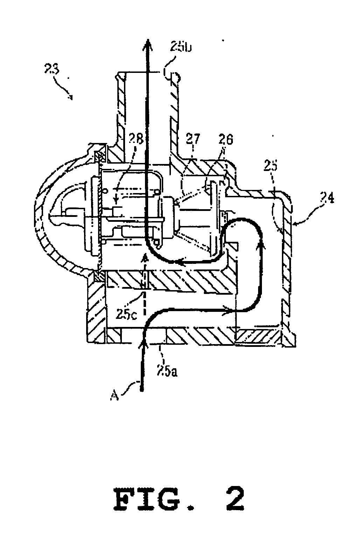

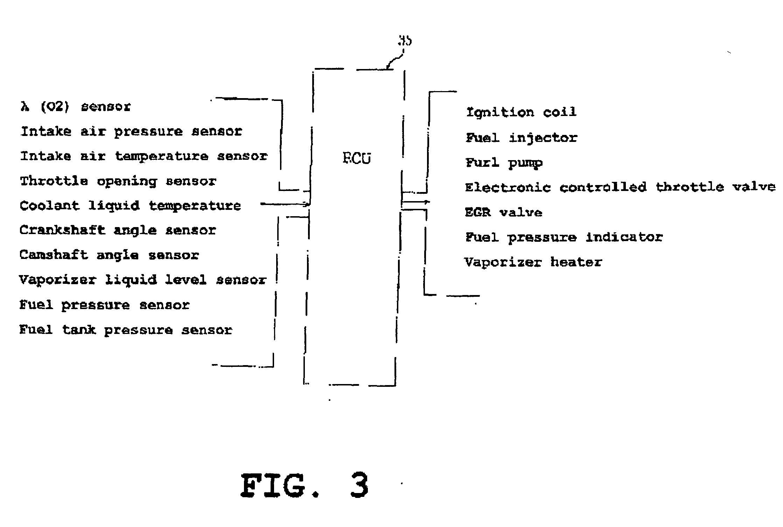

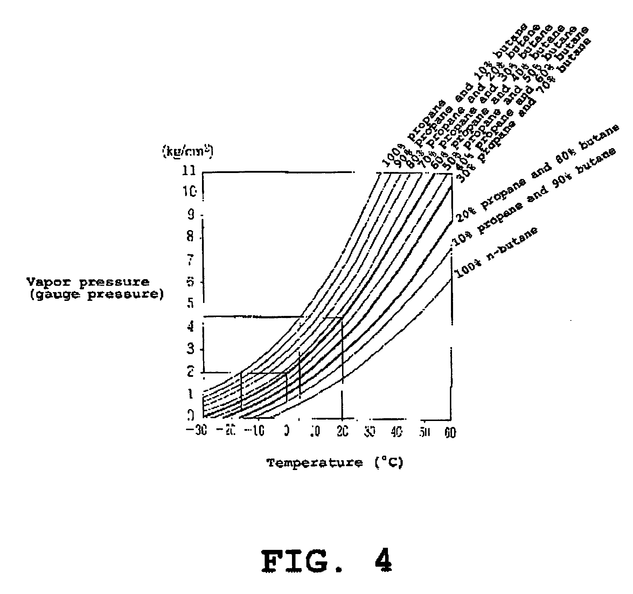

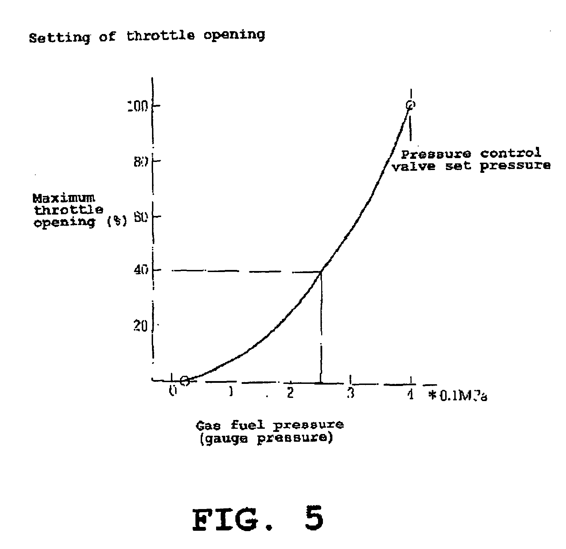

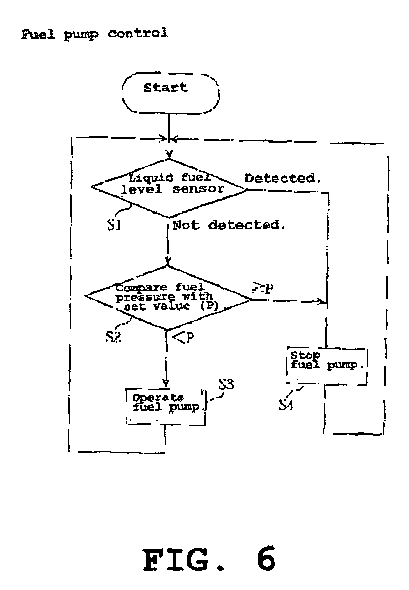

FIG. 1 through FIG. 6 are views for explaining a gas fuel supply device for an internal combustion engine according to one embodiment (first embodiment) of the present invention. FIG. 1 is a view illustrating the entire structure of the gas fuel supply device, FIG. 2 is a cross-sectional view of a thermostat, FIG. 3 is a control diagram illustrating the ECU, FIG. 4 is a characteristic curves showing the relations between the vapor pressures of LPG fuels and the temperature, FIG. 5 is a characteristic curve showing the relation between the gas fuel pressure and the maximum opening of a throttle valve, and FIG. 6 is a flowchart illustrating the operation of a fuel pump.

In the figures, the reference numeral 1 denotes a gas fuel supply device for vaporizing liquid fuel filled in a fuel tank 2 into gas fuel and supplying the gas fuel to fuel injection valves 4 of an engine 3. The engine 3 is a water-cooled, four cycle, serial four-cylinder engine and the fuel injection valve 4 is provided in each cylinder. A common delivery pipe 5 is connected to the fuel injection valves 4.

Into the fuel tank 2 is inserted an upstream end 6a of a fuel supply pipe 6. The fuel supply pipe 6 has a downstream end 6b which is connected to a fuel supply port 5a of the delivery pipe 5. The fuel tank 2 has an upper wall provided with a fuel filling port 2b through which liquid fuel is filled thereinto.

A fuel pump 7 is housed in the fuel tank 2. The fuel pump 7 has a discharge port 7a which is connected to the upstream end 6a of the fuel supply pipe 6 and a suction port 7b which opens into a recess 2a formed in the bottom of the fuel tank 2.

A manual valve 8 is connected to the fuel supply pipe 6 at a location downstream of the fuel tank 2 and a solenoid valve 9 is connected downstream of the manual valve 8. On the downstream side of the solenoid valve 9, a fuel filter 10 for filtering liquid fuel is integrally connected thereto. The solenoid valve 9 is for shutting off fuel supply in an emergency or the like.

A vaporizer 11 is interposed in the fuel supply pipe 6 at a location downstream of the fuel filter 10 to vaporize the liquid fuel. The vaporizer 11 comprises a heating section 12, a surge tank section 13 and a pressure setting device 14 which are integrally connected from the upstream side and gas fuel vaporized in the vaporizer 11 is supplied to the delivery pipe 5.

A relief pipe 18 provided therein with a relief valve 19 is connected to the upstream end 6a of the fuel supply pipe 6, and the relief pressure of the relief valve 19 is set equal to or slightly lower than the predetermined value of gas fuel pressure on the outlet side of the pressure setting device 14. The relief valve 19 has a fuel relief opening 19a which is located higher than the suction port 7b of the fuel pump 7 and oriented in the opposite direction thereto.

A check valve 20 is interposed between the discharge port 7a of the fuel pump 7 and the relief pipe 18. The check valve 20 permits discharge of liquid fuel from the fuel pump 7 and prevents reverse flow of liquid fuel to the fuel pump 7.

The heating section 12 is partitioned from the surge tank section 13 and tightly sealed. A part 6c of the fuel supply pipe 6 is inserted into the heating section 12. A cooling liquid inlet 12a and a cooling liquid outlet 12b are connected to the heating section 12. A cooling liquid supply hose (not shown) for introducing engine cooling liquid A from the engine 3 is connected to the cooling liquid inlet 12a and a cooling liquid recovery hose (not shown) is connected to the cooling water outlet 12b.

A thermostat 23 as cooling liquid control means is disposed at the cooling liquid outlet 12b of the heating section 12. The thermostat 23 has a cooling liquid passage 25 formed in a housing 24 and having a cooling liquid inlet 25a which opens into the heating section 12 and a cooling liquid outlet 25a which is connected to the cooling liquid outlet 12b as shown in FIG. 2. A thermostat valve 26 for opening and closing the cooling liquid passage 25 is provided in the housing 24 and held at the closed position by a spring 27. A thermosensitive operating element 28 such as a bimetal or thermowax is connected to the thermostat valve 26. The thermosensitive operating element 28 closes the thermostat valve 26 when the temperature of the engine cooling liquid A reaches 30-40°C and opens the thermostat valve 26 when the temperature of the engine cooling liquid A is lower than the temperature. Designated as 25c is a bypass passage.

The engine cooling liquid A introduced into the heating section 12 promote evaporation of liquid fuel in the part 6c of the fuel supply pipe 6 and gas fuel is supplied to the surge tank section 13. When the temperature of the engine cooling liquid A exceeds 30-40°C, the thermostat valve 26 is closed. Thereby, the fuel injection pressure is controlled at the vapor pressure or lower, and a stable fuel injection pressure can be obtained without operation of the fuel pump 7.

The part 6c of the fuel supply pipe 6 extending through the heating section 12 opens into the surge tank section 13. In the surge tank section 13, there is provided a weir plate 30 extending from the top wall toward the bottom wall. Gas fuel having flown into the surge tank section 13 through the fuel supply pipe 6c flows along the weir plate 30 to a bottom 13b of the surge tank section 13 and ascends therefrom, and then flows into the pressure setting device 14 through a discharge part 13a formed at the upper end of the surge tank section 13.

The capacity of the surge tank section is 3-7.5% of the total stroke capacity of the engine 3. A liquid fuel level sensor 31 is inserted and located in the surge tank section 13. The liquid fuel level sensor 31 is for detecting the presence or absence of liquid fuel accumulated at the bottom 13b of the surge tank section 13.

The pressure setting device 14 controls the pressure of the gas fuel having flown from the surge tank at a predetermined value. The pressure is set to a value in the range of 0.2-0.45 Mpa, for example, and the gas fuel is supplied to the fuel injection valves 4 at the predetermined pressure.

The pressure is set almost equal to the fuel injection pressure. The set pressure is based on the fuel characteristics of LPG. Namely, as shown in FIG. 4, when the pressure is set to a low value of 2 kg/cm² (0.2 Mpa), for example, the vaporizing temperature of the liquid fuel is lowered to about -15°C for 100% propane and about 0°C for a mixture of 50% propane and 50% butane. Thus, the temperature limit up to which the engine can be operated without a special device can be lowered. In a real model, however, a fuel injection valve which can inject a large amount of fuel will be needed, which increases the size of the fuel injection valve and thus decreases the degree of freedom in the layout of it. Also, the increase in the mass of the operating mechanism of the fuel injection valve lowers the responsiveness of the fuel injection valve and thus lowers the maximum limit of the engine speed.

When the pressure is set to a high value of 4.5 kg/cm² (0.45 Mpa), for example, the vaporizing temperature of the liquid fuel is raised to about 5°C for 100% propane and about 20°C for a mixture of 50% propane and 50% butane, and the operating condition which requires a device such as one according to this embodiment is extended. In this case, when a 100% propane liquid fuel with low lubricity is used, the load on the fuel pump increases and power consumption is increased. In addition, the structural requirements for the fuel supply pipe and so on must be high to prevent gas leakage. In view of the above, the pressure is preferably set to a value in the range of 0.2-0.45 Mpa. The value is sufficiently lower than the fuel injection pressures of LPG direct injection systems in practical use (5 bar (0.5 Mpa) + vapor pressure).

The gas fuel supply device 1 has an ECU 35. The ECU 35 receives detection values "a" from sensors (not shown) such as a λ (O₂) sensor, an intake air pressure sensor, an intake air temperature sensor, a throttle opening sensor, a cooling liquid temperature sensor, a crankshaft angle sensor and a camshaft angle sensor, and controls the fuel ignition timing and the fuel injection amount from the fuel injection valve 4 and the ignition timing of the ignition coil based on the detection values "a".

The ECU 35 also receives detection values "b", "c" and "d" from a fuel tank pressure sensor 36 provided in the fuel tank 2, a liquid fuel level sensor 31 provided in the surge tank section 13, and a gas fuel pressure sensor 37 disposed on the outlet side of the pressure setting device 14, respectively, and the fuel pump 7, and controls the fuel pump 7, the solenoid valve 9, the throttle valve 3a and so on based on the detection values "a" to "d".

The ECU 35 functions as throttle opening control means. The throttle opening control means controls the maximum opening of the throttle valve 3a as shown in FIG. 5 according to the detection value "d" from the gas fuel pressure sensor 37. For example, when the set pressure is 0.4 Mpa and the gas fuel pressure is 0.25 Mpa, the throttle opening control means limits the maximum opening of the throttle valve 3a to 40%. The throttle opening control means may be configured to limit the maximum opening of the throttle valve to a lower degree when the gas fuel pressure is 0.25 Mpa and the engine speed is higher than a value set based on the gas fuel pressure.

When the gas fuel pressure is 0.4 Mpa or lower, the ECU 35 outputs a rated output operation impossible signal to the indication lamp 39 and turns it on to inform the driver the fact that the engine cannot be operated at its rated power.

The ECU 35 functions as fuel pump control means. The fuel pump control means drives the fuel pump 7 when the detection value "d" from the gas fuel pressure sensor 37 is not greater than a predetermined value and stops the operation of the fuel pump 7 when the detection value "c" from the liquid fuel level sensor 31 exceeds a predetermined value even if the gas fuel pressure is not greater than the predetermined value.

Namely, as shown in FIG. 6, when the liquid fuel level sensor 31 in the surge tank section 13 does not detect anything and the gas fuel pressure on the outlet side of the pressure setting device 14 is lower than 0.4 Mpa after the start of the engine, the ECU 35 determines the temperature of the liquid fuel to be low and operates the fuel pump 7 to supply fuel to the vaporizer 11 rapidly (steps S1 to S3).

When liquid fuel flows into the surge tank section 13 over a prescribed level while the fuel pump 7 is operating, the ECU 35 stops the fuel pump 7 (step S4). Even if the liquid fuel in the surge tank section 13 is less than the prescribed level, when the gas fuel pressure is not lower than the predetermined value (0.4 Mpa), the ECU 35 stops the fuel pump 7.

According to the gas fuel supply device 1 of this embodiment, the maximum opening of the throttle valve 3a is limited according to the gas fuel pressure in the pressure setting device 14. Thus, when the evaporation amount of liquid fuel is small and its vapor pressure is low, the maximum opening of the throttle valve 3a is limited to a small degree to secure a sufficient fuel injection pressure and to prevent flow-out of liquid fuel. Therefore, fuel injection control can be performed with stability.

In this embodiment, the operation of the fuel pump 7 is stopped when liquid fuel in the surge tank section 13 reaches a prescribed level. Thus, it is possible to prevent the fuel pump 7 from supplying excess fuel to the vaporizer 11, and fuel injection control can be performed with stability.

Since the surge tank section 13 is provided in the vaporizer 11, gas fuel vaporized in the heating section 12 can be reserved. Thus, it is possible to secure a necessary amount of gas fuel in a high-load region without setting the gas fuel pressure to a very high value.

Also, since the capacity of the surge tank section 13 is 3-7.5% of the engine displacement, operation control of the fuel pump 7 can be performed with stability even when liquid fuel flows thereinto and, therefore, the air-fuel ratio can be controlled easily.

In this embodiment, the fuel pump 7 is operated when no liquid fuel has flown into the surge tank section 13 and the gas fuel pressure in the pressure setting device 14 is not greater than 0.4 Mpa. Thus, fuel can be stably supplied even when the temperature in the fuel tank 2 is lower than ambient temperature, and, therefore, fuel injection control can be performed with stability also in this respect.

In this embodiment, the relief pressure of the relief valve 19 is set equal to or lower than the gas fuel pressure in the pressure setting device 14. Thus, it is possible to prevent liquid fuel from being pressure-fed toward the surge tank section 13 when the fuel pump 7 is operating.

Also, since a check valve 20 is disposed on the side of the discharge port 7a of the fuel pump 7, it is possible to prevent gas generated in the fuel supply pipe 6 while the engine is not operating from flowing in reverse to the fuel pump 7. Also, since the fuel opening 19a of the relief valve 19 is oriented in the opposite direction to the suction port 7b of the fuel pump 7, it is possible to prevent back-flowing gas discharged from the fuel opening 19a of the relief valve 19 from being sucked into the fuel pump 7.

According to this embodiment, since the heating section 12 for heating liquid fuel with the engine cooling liquid A is provided in the vaporizer 11, it is possible to promote vaporization of liquid fuel when the temperature is low. Thus, the air fuel ratio can be stably controlled at the start of the engine and a failure in starting the engine can be prevented.

In this embodiment, the temperature of the engine cooling liquid A is controlled at 30-40°C. Thus, it is possible to prevent an abnormal temperature rise of gas fuel, a decrease in engine output due to decrease in fuel supply amount and a decrease in thermal efficiency due to lowering of anti-knocking ability.

Since the temperature of the engine cooling liquid A at the outlet of the heating section 12 is maintained at 30-40°C, a commercially available LPG fuel can be vaporized with ease at a temperature of 40°C or lower when the gas fuel pressure is set to 0.4 Mpa.

Also, since the temperature of the engine cooling liquid A is controlled by a thermostat 23, the temperature control can be performed easily and accurately with a simple structure without increasing costs.

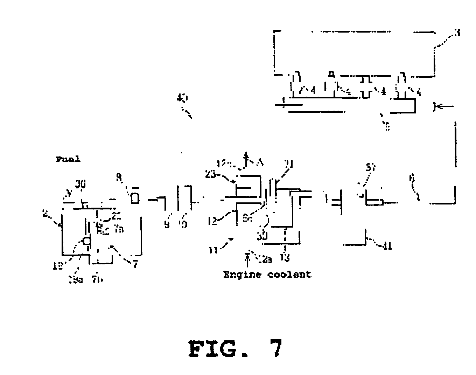

FIG. 7 is a view for explaining a gas fuel supply device according to a second embodiment of the present invention. In FIG. 7, parts or components similar to those in FIG. 1 are identified with the same numerals and their description will be omitted.

In a gas fuel supply device 40 of this embodiment, a pressure setting device 41 is provided independently from the vaporizer 11. The vaporizer 11 comprises a heating section 12 and a surge tank section 13 which are integrated with each other. The pressure setting device 41 is disposed downstream of the vaporizer 11, on the side of the fuel injection valves 4.

In this embodiment, the pressure setting device 41 is separated from the vaporizer 11. Thus, the degree of freedom in arranging the pressure setting device 41 is high. For example, when the pressure setting device 41 is disposed in the vicinity of the fuel injection valves 4, it is possible to maintain the fuel injection pressure stably and to prevent re-liquefaction of gas fuel due to lowering of temperature.

### Industrial Applicability

In the gas fuel supply device according to the invention of claim 1, the maximum opening of the throttle valve is limited according to the gas fuel pressure on the downstream side of the vaporizer. Thus, since the maximum opening of the throttle valve is limited to a small degree when, for example, the evaporation amount of liquid fuel is small and its vapor pressure is low, it is possible to secure a sufficient fuel injection pressure and to prevent flow-out of liquid fuel. Therefore, fuel injection control can be performed with stability in an electronic controlled fuel supply device employing a gas fuel.

In the invention of claim 2, the maximum opening of the throttle valve is determined based on the gas fuel pressure and the engine speed. Thus, the fuel injection control can be performed with further stability by making the maximum opening of the throttle valve smaller as the engine speed is higher and making it larger as the engine speed is lower.

In the invention of claim 3, when the gas fuel pressure is not greater than a predetermined value, an indication lamp, for example, is turned on to inform the driver that the engine cannot be operated at its rated power. Thus, it is possible to ease the driver's uncomfortable feeling that the vehicle speed does not corresponds to the amount the accelerator pedal is depressed.

In the invention of claim 4, when the gas fuel pressure is not greater than a predetermined value, the fuel pump is operated.
Thus, liquid fuel can be stably supplied even when the temperature in the fuel tank is lower than ambient temperature. When liquid fuel has been kept in an atmosphere at a temperature lower than ambient temperature for a long time, the liquid fuel may not be able to be supplied to the internal combustion engine side. This is because the temperature of the vaporizer is raised and vaporization of the fuel therein is promoted when the internal combustion engine is started but the temperature in the fuel tank is hardly raised even after the engine has been started.

In the invention of claim 5, the fuel pump is stopped when liquid fuel is detected on the downstream side of the vaporizer. Thus, it is possible to prevent the fuel pump from supplying excess fuel to the vaporizer. Also, it is possible to secure a sufficient fuel injection pressure and to prevent flow-out of liquid fuel. Therefore, fuel injection control can be performed with stability in an electronic controlled fuel supply device employing a gas fuel.

In the invention of claim 6, since a surge tank for reserving gas fuel vaporized in the vaporizer is provided, it is possible to secure a necessary amount of gas fuel in a high-load region without setting the gas fuel set pressure to a very high value. When liquid fuel is vaporized in the vaporizer into gas fuel, the volume is significantly increases. Thus, in order to secure a necessary amount of gas fuel in a high-load region without a surge tank, it is necessary to set the supply pressure of gas fuel to a high value.

Also, since there is provided a surge tank with a sufficient capacity, operation control of the fuel pump can be performed with stability even when liquid fuel flows thereinto and, therefore, the air-fuel ratio can be controlled with ease. Namely, without a surge tank or with a surge tank with a small capacity, on-off control of the fuel pump must be repeatedly performed for a short period of time and control of the air-fuel ratio may be unstable.

In the invention of claim 7, the surface level of the liquid fuel having flown into the surge tank is detected with a level sensor. Thus, the fuel pump can be reliably stopped when the amount of liquid fuel reached a prescribed level. This allows more stable control of the engine.

In the invention of claim 8, a relief valve is provided on the discharge port side of the fuel pump and the relief pressure of the relief valve is set equal to or lower than the predetermined value of gas fuel pressure. Thus, the discharge pressure of the fuel pump can be controlled at the predetermined value or lower, and liquid fuel can be prevented from being pressure-fed to the downstream side of the vaporizer.

In the invention of claim 9, since a check valve is provided between the discharge port of the fuel pump and the relief valve, it is possible to prevent gas generated in the fuel supply passage while the engine is not operating from flowing in reverse into the fuel pump.

In the invention of claim 10, the fuel opening of the relief valve is not oriented to the suction port of the fuel pump. Thus, it is possible to prevent back-flowing gas discharged through the fuel opening of the relief valve from being sucked into the fuel pump.

## Claims

1. A gas fuel supply device for an internal combustion engine adapted to vaporize liquid fuel in a fuel tank into a gas fuel and supply said gas fuel to a fuel injection valve, said gas fuel supply device comprising:
a vaporizer interposed in a fuel supply passage for vaporizing said liquid fuel,
fuel pressure detecting means for detecting the gas fuel pressure on the downstream side of said vaporizer, and
throttle opening control means for limiting the maximum opening of a throttle valve according to said gas fuel pressure detected by said fuel pressure detecting means.

2. The gas fuel supply device for an internal combustion engine as claimed in claim 1,
wherein said throttle opening control means is adapted to determine said maximum opening of said throttle valve based on said gas fuel pressure and the engine speed.

3. The gas fuel supply device for an internal combustion engine as claimed in claim 1 or 2,
wherein said throttle opening control means is adapted to output a rated output operation impossible signal to display means when said gas fuel pressure detected by said fuel pressure detecting means is a predetermined value or lower.

4. A gas fuel supply device for an internal combustion engine adapted to vaporize liquid fuel in a fuel tank into a gas fuel and supply said gas fuel to a fuel injection valve, said gas fuel supply device comprising:
a vaporizer interposed in a fuel supply passage for vaporizing said liquid fuel,
a fuel pump for supplying said liquid fuel in said fuel tank to said vaporizer,
fuel pressure detecting means for detecting the gas fuel pressure on the downstream side of said vaporizer, and
fuel pump control means for operating said fuel pump when said gas fuel pressure on the downstream side of said vaporizer is a predetermined value or lower.

5. The gas fuel supply device for an internal combustion engine as claimed in claim 4,
further comprising liquid fuel detecting means disposed on the downstream side in said vaporizer for detecting liquid fuel,
wherein said fuel pump control means stops the operation of said fuel pump when said liquid fuel detecting means detects liquid fuel.

6. The gas fuel supply device for an internal combustion engine as claimed in claim 4 or 5,
further comprising a surge tank for reserving gas fuel vaporized in said vaporizer.

7. The gas fuel supply device for an internal combustion engine as claimed in claim 5 or 6,
wherein said liquid fuel detecting means is a level sensor for detecting the surface level of liquid fuel flown into said surge tank.

8. The gas fuel supply device for an internal combustion engine as claimed in any one of claims 4 to 7,
further comprising a relief valve disposed on the discharge port side of said fuel pump,
wherein the relief pressure of said relief valve is set equal to or slightly lower than said gas fuel pressure on the downstream side of said vaporizer.

9. The gas fuel supply device for an internal combustion engine as claimed in claim 8,
further comprising a check valve disposed between said discharge port of said fuel pump and said relief valve for preventing reverse flow of liquid fuel to said fuel pump.

10. The gas fuel supply device for an internal combustion engine as claimed in claim 8 or 9,
wherein said relief valve has a relief fuel opening which is not oriented to the suction port of said fuel pump.
